# EUROPEAN PATENT SPECIFICATION

(11) **EP 3 481 228 B1**
(45) Date of publication and mention of the grant of the patent: **25.08.2021**
(21) Application number: 17742710.1
(22) Date of filing: 14.07.2017
(51) Int. Cl.: A23L 7/104, A23L 11/00, A23L 19/10, A23L 19/12, A23L 29/30, C08B 30/12, A23L 19/15, A23L 7/10, A23L 7/143, A23L 11/50

(54) **PROCESS FOR PREPARING HYDROLYSED STARCH WITH REDUCED SUGAR CONTENT**
VERFAHREN ZUR HERSTELLUNG VON HYDROLYSIERTER STÄRKE MIT REDUZIERTEM ZUCKERGEHALT
PROCÉDÉ DE PRÉPARATION D'AMIDON HYDROLYSÉ À TENEUR RÉDUITE EN SUCRE

(30) Priority: 15.07.2016 EP 16179668; 16.12.2016 EP 16204620
(43) Date of publication of application: 15.05.2019
(73) Proprietor: Société des Produits Nestlé S.A., 1800 Vevey (CH)
(72) Inventor: MATEUS, Maria-Luiza, 1052 Le Mont-sur-Lausanne (CH); HARTMANN, Lukas, 6300 Zug (CH); PERRIN, José Daniel, 2108 Couvet (CH); RAMOS CARNASA, Jordi, Fort Smith Arkansas 72903 (US); VAFEIADI, Christina, 1000 Lausanne 26 (CH)
(74) Representative: Rupp, Christian
(86) International application number: PCT/EP2017/067858
(87) International publication number: WO 2018/011401

(56) References cited:
- WO-A1-03/024242
- WO-A1-2016/172298
- US-A- 4 710 386
- US-A- 5 912 031
- US-A1- 2003 072 843
- US-A1- 2009 005 553
- US-A1- 2011 159 145
- US-A1- 2012 135 466
- US-A1- 2013 197 104
- US-A1- 2015 240 223
- US-A1- 2016 081 375
- US-B1- 6 190 708

## Description

### Technical field of the invention

The present invention relates to a method of preparing a food product comprising hydrolysed starch. In particular, the present invention relates to a method of preparing a food product comprising hydrolysed starch with lower amounts of maltose, as compared to conventional hydrolysis processes.

### Background of the invention

In current manufacturing processes for production of starch-containing food products, amylolytic enzymes are used to break down starch and decrease product viscosity. High viscosity products are difficult to handle in the manufacturing line, and therefore the starch is treated with enzymes which results in lower viscosity. However, starch degradation also leads to the production of disaccharides, in particular maltose among others. There is a growing concern of the effects of sugar (mono- and disaccharide) levels in food products, and therefore lower levels of sugars such as maltose, are desired. Sugar levels are a particularly important concern in the production of food products for infants and/or children.

It is known that cereal flour contains also natural enzymes which produce maltose under specific conditions. Gelatinization and the activity of this enzyme seem to play an important role on extent of maltose production (Effect of Gelatinization and Hydrolysis Conditions on the Selectivity of Starch Hydrolysis with alpha-Amylase from Bacillus licheniformis. T. Baks et al., J. Agric. Food Chem. 2008, 56, 488-495; Etude de la mesure de l'activité de la bêta et de I'alpha-amylase des farines de froment. R. Geoffroy, Novembre-Décembre 1954).

US2013/197104A1 discloses a reduced sugar syrup having a low viscosity, prepared by hydrolysis of starch or starchy material using a particular type of alpha amylase enzyme which yields a saccharide distribution having a low DP1-2 and low DP11+ content.

Hence, an improved process for hydrolysis of starch would be advantageous.

### Summary of the invention

Thus, an object of the present invention relates to providing a method for producing a food product comprising hydrolysed starch.

In particular, it is an object of the present invention to provide a method that solves the above mentioned problems of the prior art concerned with levels of sugar in foods comprising hydrolysed starch. More in particular, it is an object of the present invention to provide a method that provides food product comprising hydrolysed starch with lower amounts of maltose, as compared to conventional hydrolysis processes.

Thus, one aspect of the invention relates to a method for producing a food product comprising hydrolysed starch, said method comprising the steps of:
a) Providing a starting material which comprises both starch and at least one amylolytic enzyme,
b) Providing as ingredients: water, at least one further amylolytic enzyme comprising amylase not endogenous to the provided starting material and optionally one or more other ingredients,
c) Mixing the starting material of step a) and the ingredients of step b)
d) adjusting the temperature of the mixture of step c) to a temperature which leads to gelatinization of the starch in said mixture and inactivation of the at least one amylolytic enzyme which was provided with the starting material in a), and
e) simultaneously to step d) subjecting said mixture of step c) to high shear mixing, wherein said high shear mixing is achieved by use of a Ring Layer Mixer,
f) Incubating the mixture of step e) such that the desired degree of hydrolysis is achieved,thereby obtaining a food product comprising hydrolysed starch.

### Brief description of the figures

Figure 1 shows the conventional process of hydrolysis (see Example 1).
Figure 2 shows set up for hydrolysis using a high shear mixer (Ring Layer Mixer, see Example 2).
Figure 3 shows the conventional set up for in line hydrolysis (see Example 3)
Figure 4 shows set up for in-line hydrolysis using high shear mixer (Ring Layer Mixer, see Example 4).
Figure 5 shows the results from sensory panel testing comparison of finished product obtained by conventional and invented process (see Example 6).

The present invention will now be described in more detail in the following.

### Detailed description of the invention

### Definitions

Prior to discussing the present invention in further details, the following terms and conventions will first be defined:
The term 'degrees C' refers to degrees Celsius.

The term "starch" as used herein refers to the polysaccharide macromolecules used for energy storage by most plants. It consists of a large number of glucose units joined by glycosidic bonds. The two high-molecular weight components of starch are amylose and amylopectin. Starch is found for example in cereals, tubers and legumes. Examples of tubers include potatoes, sweet potatoes, cassava, yams etc. Examples of legumes include beans (such as pinto, red, navy), peas, lentils, chickpeas, peanuts etc. When the term "starch" is used in the context of the present invention, it may indicate starch from one plant origin or a mixture of starches from different plant origins.

The term "cereal" as used herein refers any grass cultivated for the edible components of its grain. Examples of cereal are wheat, rice, maize, barley, rye, oats, buckwheat, millet, quinoa, sorghum et cetera.

The term "food product" as used herein refers to a finished product suitable for human consumption and/or to a intermediate preparation which is meant to deliver a finished product after being subject to additional processing step(s), comprising a heat treatment.Specific non-limiting examples of finished food products are biscuits, wafers, cereals (breakfast and infant), bread, bakery products, pizza, cereal milk drink, baby food and the like. Specific non-limiting examples of preparation which are meant to deliver a finished product after being subject to additional processing steps are batters, doughs, slurries and the like.

Within the context of the present invention, "Infant cereal" products identifies two main categories: complete cereal product which need to be reconstituted in water as they already contain all the necessary nutrients to be delivered with the meal; and standard cereal product which are meant to be reconstituted with milk, infant formula, follow-on formula and/or GUMs .

Within the context of the present invention, the term "all family cereals" identifies compositions containing cereals to be consumed by children and adults. For example, all family cereals are reconstituted in milk (whole or skimmed) and consumed in the format of a porridge.

The term "gelatinization" as used herein refers to the process of swelling and opening of starch granules, where the intermolecular bonds of starch molecules in a starch granule are broken, leading to the binding of water and the irreversible dissolving of the starch granule in water. The determination of the gelatinization temperature is well known to the skilled person, and may be performed by e.g. the Kofler hot stage microscopy (see further Table 1 and notes), or for example by Differential Scanning Calorimetry (DSC).

The term "amylolytic enzymes" as used herein refers to any enzyme capable of converting starch into dextrins and sugar (mono- or disaccharides). Examples of amylolytic enzymes include amylases and pullulanase. Examples of amylases include alpha-amylases, beta-amylases, gamma-amylases.

### Method of the invention

In conventional processes for preparing starch-containing foods, the viscosity of the starch presents a problem. In order to avoid viscosity build-up, enzymatic hydrolysis of the starch is often performed. However, such hydrolysis may lead, among others, to the production of maltose, increasing the level of sugar present in the product of the process. The amount of sugars present in food is the subject of some concern, and therefore it is desirable to limit the amount of simple sugars (mono- and disaccharides) present in food products. The present invention is based on the surprising finding that implementation of the method of the invention yields a food product comprising hydrolysed starch with lower amounts of maltose, as compared to conventional hydrolysis processes.

Without wishing to be bound by theory, it is believed that by the method of the invention, the starch granules of the starting material in the presence of water hydrate and start to swell. The starch molecules are thus available to be digested by the added amylolytic enzymes (e.g. amylases) at sites within the long chains rather than at the extremities. Endogenous amylases present in the starting material would favour digestion at the extremities (ends of the chains), thereby yielding disaccharides and higher sugar (maltose) content. At the same time, the endogenous amylases present in the starting material are immediately inactivated and thus do not yield disaccharides (i.e. maltose). Also at the same time, the shear forces present in the method favour the disruption of starch granules thereby contributing to the digestion of the starch molecules, and allow reducing the reaction time and/or the amount of amylase added. Thus, the surprising effect of the method of the invention noted by the inventors, is to synergistically decrease the amount of sugar (in particular maltose) generated during starch hydrolysis.

The method of the invention thus relates in one embodiment to a method for producing a food product comprising hydrolysed starch, said method comprising the steps of:
a) Providing a starting material which comprises both starch and at least one amylolytic enzyme,
b) Providing as ingredients: water, at least one further amylolytic enzyme not endogenous to the provided starting material and optionally one or more other ingredients,
c) Mixing the starting material of step a) and the ingredients of step b)
d) adjusting the temperature of the mixture of step c) to a temperature which leads to gelatinization of the starch in said mixture and inactivation of the at least one amylolytic enzyme which was provided with the starting material in a), and
e) simultaneously to step d) Subjecting said mixture of step c) to high shear mixing, wherein said high shear mixing is achieved by use of a Ring Layer Mixer,
f) Incubating the mixture of step e) such that the desired degree of hydrolysis is achieved,thereby obtaining a food product with hydrolysed starch.

### Starting material

The method of the invention involves providing a starting material which comprises both starch and at least one amylolytic enzyme.

Some embodiments relate to methods according to the invention wherein the starting material is a plant preparation, such as a preparation of that part of the plant which contains the majority of the plant's starch storage granules. In some embodiments such preparations may also include other parts of the plant, such as stems, leaves etc. Such plant preparations typically also comprise at least one amylolytic enzyme.

In particular embodiments, the starting material is a dry plant preparation, such as a flour. Thus, the starting material may be selected from a flour of one or more grains, such as a flour selected from wheat flour, rice flour, maize flour, barley flour, rye flour, oat flour, buckwheat flour, millet flour, quinoa flour, sorghum flour; a flour made from one or more tubers, such as potato, cassava; a flour made from legumes such as pea flour; or combinations thereof.

The term dry as used herein means comprising water in the range from 0.01 to 20 % w/w such as from 0.01 to 16% w/w, 0.01 to 15% w/w, 0.01 to 12% w/w, 0.01 to 8% w/w, 0.01 to 5% w/w, 0.01 to 3% w/w, w/w such as 0.01 to 0.5 % w/w%, or for example being essentially free from water. For example, wheat flour may contain up to 15% moisture (w/w), such as from 12 to 15% w/w, 12 to 14% w/w or 12 to 13% w/w, and is considered a dry plant preparation.

The term flour as used herein refers to the product of milling. The particle size or particle size distribution of the flour is not considered to be critical for the method. Plant preparations in the form of flours which are suitable as starting material for production of hydrolysed starch are known in the art, and selection of such is also within the skill of the person skilled in the art.

### Endogenous amylolytic enzymes

The starting material for the method of the invention comprises both starch and at least one amylolytic enzymes. The at least one amylolytic enzymes present in the starting material may be endogenous amylolytic enzymes. In other words, the starting material may comprise amylolytic enzymes which have not been added by human intervention, but rather have been co-extracted together with the starch (granules) from the plant material, i.e. endogenous amylolytic enzymes.

Examples of endogenous amylolytic enzymes include alpha-amylases, and beta-amylases and gamma amylases.

For example, in the specific case of wheat, endogenous amylolytic enzymes, in particular endogenous amylases, are typically inactivated above 60-70 degrees C. Inactivation temperature of endogenous enzymes in other cereals could be determined according to procedure well known to the skilled person, for example by using commercial kits to determine enzyme activity under different conditions.

Examples of commercially available kits which may be used are Betamyl method (K-beta3 10/10) available from Megazyme ™ (beta amylase activity), and Phadebas® (alpha amylase activity).

The invention in one embodiment relates to a method according to the invention wherein in step d) is the temperature of the mixture of step c) is adjusted to a temperature which leads to gelatinization of the starch and inactivation of endogenous amylolytic enzymes in said mixture. Such temperature adjustement is simultaneous to subjecting the mixture of step c) to high shear mixing as described in step e).

The endogenous amylolytic enzymes digest starch molecules and yield maltose. One advantage of the method according to the invention is that the endogenous amylolytic enzymes are inactivated very rapidly- almost instantaneously, thereby preventing their production of maltose and reducing the amount of maltose in the final food product. The rapid inactivation of the endogenous amylolytic enzymes is believed to be effected by the heating to gelatinization temperature, together with the simultaneous high shear mixing implemented by the method (see further below).

### Providing water

The method of the invention comprises providing water and mixing with the starting material. Enzymatic hydrolysis of starch requires the presence of water. If the starting material is provided in dry form, such as for example a dry plant preparation, such as for example a plant flour, water may be provided by one or more of steam injection, addition of water, the provision of an aqueous further ingredient, provision of an aqueous solution of at least one further amylolytic enzyme or combinations thereof.

If the starting material is not in dry form, but comprises more than 20% water w/w, or for example more than 15% water w/w, the water may be considered to be at least partially provided by the starting material. In some embodiments, further water may also be provided, for example by one or more of steam injection, addition of water, the provision of an aqueous further ingredient, provision of an aqueous solution of at least one further amylolytic enzyme or combinations thereof.

In particular embodiments, the provision of water comprises providing water in the form of steam. In particular embodiments, water in the form of steam is provided by way of steam injection, such as direct steam injection. In other embodiments, water in the form of steam is provided by way of steam infusion (where ingredients are sprayed in a steam atmosphere). Direct steam injection has the advantage of rapidly heating the mixture of starting material, the optionally water provided from above-mentioned other sources, the at least one further amylolytic enzyme and any optional further ingredients, at the same time as water is added.

Direct steam injection may be achieved by any suitable means, and the selection of such a means is within the skill of a person of ordinary skill in the art.

In one embodiment, when the provision of water is at least partially in the form of steam, such steam provision may occurr simultaneaously to steps d) and e).

Some embodiments relate to the method according to invention, wherein said mixture (step c) has a total solids content in the range of 20 to 60 % w/w, such as 30 to 60 % w/w, such as 35 to 60% w/w, such as such as 40 to 60% w/w, such as 45 to 60%, such as 50 to 60% w/w, such as 55 to 60%; or for example from 20 to 55% w/w, 20 to 50% w/w, 20 to 40% w/w; or for example 30 to 50% w/w, or 30 to 40% w/w.

### Further amylolytic enzymes

The method of the invention comprises a step wherein at least one further amylolytic enzyme is added to the starting material and mixed together with the starting material. Thus, in step b) an amylolytic enzyme is provided, which is in addition to the amylolytic provided in step a), and all ingredients mixed in step c).

In some embodiments, the at least one further amylolytic enzyme is provided in addition to an endogenous amylolytic enzyme provided in step a).

The at least one further amylolytic enzyme may be any suitable amylolytic enzyme, for example an amylase (such as alpha-amylase and/or beta-amylase) and/or pullalanase. In particular embodiments, the at least one further amylolytic enzyme is one or more of an alpha amylase and a beta amylase. The invention in some embodiments relates to a method according to the invention wherein said at least one further amylolytic enzyme comprises or consists of amylase not endogenous to the provided starting material.

The selection of the at least one further amylolytic enzyme may depend on the gelatinization temperature of the starch present in the starting material. Thus, in particular embodiments, this at least one further amylolytic enzyme which is provided in step b) is active at or above the temperature to which the mixture is adjusted in step d) (see further below gelatinization temperature).

In yet further particular embodiments, the at least one further amylolytic enzyme provided in step b) has a temperature optimum at or above the temperature to which the temperature is adjusted in step d). The temperature optimum of an enzyme is a certain temperature or range of temperatures where an enzyme's catalytic activity is at its greatest.

As mentioned above, the at least one further amylolytic enzyme may be provided as an aqueous solution.

Selecting an at least one further amylolytic enzyme which is active, or for example has a temperature optimum, at a temperature in or above the gelatinization temperature range of the starch present in the mixture, ensures that hydrolysis of the starch will take place and will be due to the selected enzymes.

Amylolytic enzymes are commercially available from several distributors, for example from DuPont, Novozymes, DSM, BioCatalysts.

### Further ingredients

In some embodiments of the invention, one or more other ingredients are included. The one or more further ingredients may be any ingredient suitable for a food. In particular embodiments, the one or more other ingredients added in step b) are not negatively affected by the temperature and high shear mixing of step d) and e). Examples of one or more other ingredients may be fats such as oils, protein or amino acid sources, carbohydrate sources such as sugars and/or pre-biotics, minerals, vitamins and the like.

In one embodiment, no other ingredients are provided in step b). The product obtained by this method would be an intermediate, not finished, food product referred to herein as a hydrolysed carbohydrate ingredient (HCI). See further below "Product obtainable by the method".

In some embodiments of the method, the food product obtained by a method of the invention is itself a finished food product. In such embodiments, at least one other ingredient is provided in step b), such as one or more ingredients such as for example fats such as oils, protein or amino acid sources, carbohydrate sources such as sugars and/or pre-biotics, minerals, fruit ingredients, milk based ingredients and vitamins. In one embodiement, fats such as oils are provided in step b).

### Mixing and Premixing

The method of the invention comprises a step of mixing the starting material of step a) and the ingredients of step b).

It is not believed that this mixing is critical, and thus may be done in any suitable manner. The selection of a method of mixing is within the skill of a person skilled in the art.

In some embodiments of the method according to the invention, the step c) of mixing the starting material of step a) and the ingredients of step b), is performed prior to the step d). This means that the starting material and ingredients are mixed prior to the adjustment of temperature which takes place in step d). This is referred to as "pre-mixing".

However, premixing of ingredients is not necessary: dry ingredients and water can be directly fed inside the Ring Layer Mixer.

In other, particular embodiments, the step c) of mixing takes place simultaneously with step d). For example, the starting material of step a) and the ingredients of step b) may be fed to a container, in which heating is performed and in which, at the same time, mixing takes place. In one embodiment, steps c), d) and e) are performed in a ring layer mixer, simultaneously.

### Adjusting temperature to gelatinization temperature

The method of the invention comprises a step d) where the temperature of the mixture obtained in step c) is adjusted to a temperature which leads to the gelatinization of the starch in said mixture. The temperature is adjusted simultaneously with the high shear mixing of the mixture. Without wishing to be bound by theory, It is believed that gelatinization of the starch increases access of the enzymes added to the starch molecule, which improves the efficiency of the hydrolysis process.

The gelatinizing temperature refers to the temperature (or temperature range) at which a starch gelatinizes. Different species of plants yield starches which may have different gelatinization temperatures, and these are well-known in the art. Gelatinization temperature ranges for some starches, are given below in Table 1 by way of example.

**Table 1: Typical gelatinization temperatures for some starches**

| Starch type | Gelatinization temperature range (°C)* |
|---|---|
| Wheat | 58-61-64 |
| Rice | 68-74-78 |
| Maize (Corn) | 62-67-72 |
| Potato | 58-63-68 |
| Tapioca | 59-64-69 |
| Waxy maize | 63-68-72 |
| Sorghum | 68-74-78 |

| | |
|---|---|
| * Determined by Kofler hot stage microscopy (onset- midpoint-end) (Table 8.1 "Starch: Chemistry and Technology", edited by James BeMiller and Roy Whistler, Food Science and Technology International Series, Third edition 2009). | |

Accordingly, depending on the starch type (or types) in the starting material, the temperature is adjusted to the appropriate temperature which will result in gelatinization of the starch.

The gelatinizing temperatures of different starches are well known in the art, and the selection of the appropriate gelatinizing temperature is within the skill of a person knowledgeable in the field. For example, gelatinization temperature may be determined by Kofler hot stage microscopy (see also Table 1).

In some embodiments, the extent of gelatinization of the starch is that at least half of the starch is gelatinized, such as at least 70% w/w, 80% w/w, 90 % w/w, or may be essentially complete, that is, essentially all the starch in the mixture is gelatinized.

In some embodiments, the temperature in step d) is adjusted to a temperature above starch gelatinization and endogenous amylolytic enzyme inactivation, for example above 70 degrees C, for example in the range from 70 to 95 degrees C, such as from 70-90 degrees C, or 70 -85 degrees, or for example from 75 to 95 degrees, such as from 80 to 95 or 85 to 95 degrees. This temperature range will ensure the inactivation of most endogenous amylolytic enzymes (e.g. endogenous amylases), while encompassing the temperature optimum of the at least one further amylolytic enzyme. In one embodiment, this temperature range will ensure the inactivation of wheat endogenous amylolytic enzymes (e.g. endogenous amylases), while encompassing the temperature optimum of the at least one further amylolytic enzyme.

In some embodiments of the method according to the invention, a mixture of different starches may be present in the mixture of step c). In such cases, the temperature selected in d) may be the highest gelatinization temperature of the starches present.

In particular embodiments, the step d) (adjusting the temperature of the mixture from step c) to a temperature which leads to gelatinization of the starch in said mixture) is performed by direct steam injection.

### High shear mixing

The method of the invention comprises a step of subjecting the mixture of step c) to high shear mixing, by use of a Ring Layer mixer.

The high shear mixing may be for a time period of 0.5 seconds to 10 minutes, such as 1 second to 10 minutes, such as from 1 second to 5 minutes, such as 1 second to 3 minutes, such as 1 second to 120 seconds, such as 1 second to 90 seconds, such as 1 second to 60 seconds.

The high shear mixing may be such that the mixture is homogenized within a time period of 1 second to 10 minutes, such as from 1 second to 5 minutes, such as 1 second to 3 minutes, such as 1 second to 120 seconds, such as 1 second to 90 seconds, such as 1 second to 60 seconds.

In particular embodiments, the high shear mixing is such that the mixture is homogenized within a time period of 1 second to 50 seconds, such as 1 second to 40 seconds, 1 second to 30 seconds.

In this context, homogenized means where the starch granules are swollen and dispersed into the media.

Said high shear mixing is performed simultaneously with the adjusting of the temperature to a gelatinizing temperature (step c), discussed above). As discussed, it is believed that the simultaneous temperature adjustment and high shear mixing work together to give hydrolysis of the starch, while minimizing the production of mono- and disaccharides, especially maltose.

Shear forces are unaligned forces pushing one part of the body in one direction, and another part of the body in the opposite direction.

Where the temperature adjustment is achieved using direct steam injection, the heat adjustment together with high shear mixing leads to gelatinization occurring within a very short period of time (milliseconds to seconds, such as from 0.5 seconds to 60 seconds), essentially instantaneously.

This very short time period with heating, homogenization, gelatinization and endogenous enzyme inactivation has been shown to have the effect of reducing the amount of maltose which endogenous enzymes have time to produce, at the same time as giving optimal conditions for the at least one further amylolytic enzyme to work. The combination of these effects work together to reduce the amount of disaccharides (e.g. maltose) produced.

### Ring Layer Mixer

A ring layer mixer delivers high peripheral speeds. The resulting centrifugal force brings the product outwards into a ring layer on the vessel side wall. The high speed difference between the rotating agitator and the mixing drum, combined with the use of different mixing elements ensures a high shear mixing.

Direct steam injection is simple to implement when using a ring layer mixer, which is a further advantage of using a ring layer mixer.

Some embodiments relate to the method according to the invention, wherein steps c) to e) are performed in a Ring Layer Mixer. Other embodiments relate to where steps c) up to and including at least a part of step f) are performed in a Ring Layer Mixer

Particular embodiments relate to methods of the invention wherein the steps a) to e) are performed in a Ring Layer Mixer. As mentioned below, other embodiments relate to methods of the invention wherein steps a to c) are performed prior to use of the ring layer mixer (i.e., pre-mixing step) and steps d) to e) are performed in the ring layer mixer.

Other particular embodiments relate to the method of the invention where direct steam injection is used to adjust the temperature in step d) and ring layer mixer is used for high shear mixing of step e).

In one embodiment of the present invention, the speed of the ring layer mixer may range from 500 to 2500 rpm.

### Incubating

The method according to the invention comprises the step f) of incubating the mixture obtained by high shear mixing from step e) such that the desired degree of hydrolysis is achieved.

This incubation step relates to a step when the mixture from step e) is kept at a certain temperature, for a certain period of time. This incubation allows the enzymes, in particular the at least one further amylolytic enzyme of step b) to act. In some embodiments, mixing may take place in the incubation period. The mixing avoids sedimentation, and/or facilitates an even and stable temperature profile. In particular embodiments, the mixing in step f) is not high shear mixing.

The temperature may be selected to provide optimal performance of the at least one further amylolytic enzyme, such as amylase, from step b).The selection of the conditions for said incubation (temperature, time, mixing speeds) will depend on the desired degree of hydrolysis of the starch in the mixture, and is within the skill of the person with ordinary skill in the field. The desired degree of hydrolysis is determined for example by desired characteristics of the food product. For example, if higher viscosity is desired, then extensive starch hydrolysis may not be necessary.

Some embodiments relate to the method according to the invention, wherein the incubation of step f) is performed at a temperature in a range selected such that the at least one further amylolytic enzyme has an optimal activity.

The temperature at which the at least one further amylolytic enzyme has optimal activity may be determined by routine investigation, but this information is also typically provided by the supplier of the enzyme. See also under the heading Further amylolytic enzymes for further discussion of selection of temperature.

In some embodiments, the incubation of step f) is performed at a temperature in the range of from 70 to 95 degrees C, such as from 70 to 90 degrees C, for example from 70 to 85 degrees C, or for example from 75 to 95 degrees C, such as from 75 to 80 degrees C; for a period of time in the range from 1 minute to 24 hours, such as 1 minute to 12 hours, such as from 1 minute to 10 hours, such as from 1 minute to 8 hours, such as 1 minute to 7 hours, such as 1 minute to 6 hours, such as 1 minute to 5 hours, such as 1 minute to 4.5 hrs, such as 1 minute to 4 hours, such as 1 minute to 3.5 hours, such as 1 minute to 3 hours, such as 1 minute to 2.5 hours, such as 1 minute to 120 minutes, such as from 2 minutes to 80 minutes, such as from 10 minutes to 80 minutes, 10 to 60 minutes; or for example from 1 minute to 10 minutes, 1 to 8 minutes, or 1 to 5 minutes, or for example from 2 minutes to 10 minutes.

### In-line dosing

In some embodiment of the present invention, the intermediate semi finished ingredient obtainable according to method of the present invention (HCI) may be further processed by admixing with other ingredients, including other cereal based ingredients.

In such instances, it has been surprisingly discovered by the inventors that it results particularly advantageous to mix the HCI food product with the remaining ceral based ingredients immediately before a heat treatment capable of inactivating the amylolytic enzymes (such as for example step g) takes place. This approach is hereby referred to as "in line mixing" and provides the advantage of maintaining the low maltose levels achieved via preparation of the HCI ingredient according to the method of the invention, irrespective of the presence of still active amylolytic enzymes in the resulting mixture.

To minimize the generation of sugars (maltose) in-between mixing and heat treatment, the length of the equipment, (for example pipe and static mixer) is set to have less than 30 seconds, for example less than 20 seconds, holding time for the lowest flow rates.

### Further steps

Yet further embodiments relate to the method according to the invention, further comprising the step g) additional heat treatment of the mixture which was obtained by high shear mixing according to steps a) to f).

The purpose of the heat treatment in step g) is to reduce microbiological load of the product, as well as to inactivate enzymes, including the at least one further amylolytic enzyme from step b). Thus, the temperature and period of time of heat treatment of step g) will be selected in order to fulfil these two requirements and may be performed by any suitable means. It is considered to be within the skill of the person with knowledge in the field to select the means as well as appropriate temperature and time. The heat treatment of step g) may be for example performed by bringing the temperature of the homogenized mixture to a temperature in the range from 90 to 170 degrees Celsius, for a period of time from 2 seconds to 5 minutes.

In particular embodiments, the temperature in step g) is brought to a temperature in the range from 100 to 140 degrees C for a period of time of 4 seconds to 60 seconds.

In some particular embodiments, the heat treatment of step g) is performed by direct steam injection.

The heat treatment of step g) may be performed after step e), such as directly after step e).

The method of the invention may further comprise one or more further steps wherein one or more yet further ingredients are added to mixture. These ingredients may be any ingredient suitable for the food product being manufactured. In particular, ingredients which are desired to be included in the final food product, but which may be negatively affected by for example the heat and-or the high shear mixing of steps c) and d), may be advantageously added at a point after these said steps. Examples of ingredients which may be negatively affected include heat sensitive nutrients such as heat-sensitive vitamins, and-or probiotics. For example, one or more yet further ingredients may be added after step e), for example after step e) and before step f), or for example immediately after step e), or for example immediately after step e) and before step f). In some embodiments the yet further one or more ingredients may be added after step f), such as immediately after step f) and before any further steps. The person skilled in the art will recognize the requirements of conventional ingredients, including heat-sensitive nutrients and can determine at which point these may be added.

In some embodiments, the method of the invention further comprises a step i) of cooling the mixture obtained by previous step. The cooling may be effected by any suitable means, and may be for example to a temperature in the range from -20 degrees C to 18 degrees C, such as for example 0 to 10 degrees C, such as 0 to 5 degrees C.

In some embodiments, the method of the invention further comprises steps of drying, for example roller drying, and milling in order to produce a dried product which may be reconstituted before use.

In one embodiment, where optional ingredients are added in step b), the process comprises a drying step j). Drying is defined as the application of heat under controlled conditions, to remove the water present in liquid or semi-liquid foods and to yield solid products.

In one embodiment such step j) is a roller drying step.

The principle of roller drying process (or drum drying) is that a thin film of material is applied to the smooth surface of a continuously rotating, stema heated metal drum. The film of the drying material is continuously scraped off by a stationary knife located oppsite to the point of application of the liquid or semi-liquid material. The dryer consists of a single drum or a pair of drums with or without satellite rollers.

Roller drying is a conventional drying technique in the art. The person skilled in the art will be able to select appropriate roller drying temrperature and speed for the preparation of food products according to the method of the invention.

In such embodiment, the product obtained may be a finished infant or all family cereal product to be consumed in the format of a porridge after reconstitution as above described.

In another embodiment, where no optional ingredients are added in step b), the mixture of step f) is subject to a heat treatment step g). In such embodiment, the product obtained may be an intermediate food product as above defined (HCI).

The product obtainable by the method (not part of the invention)

The food product obtainable by the method of the invention (not part of the invention) may be described as comprising hydrolysed starch and reduced amounts of maltose. The term reduced amounts of maltose in this context means that amounts of maltose which are reduced as compared to amounts maltose produced by conventional starch hydrolysis processes, such as the one described in Example 1. In particular, the amount of maltose is reduced as compared to starch hydrolysis methods which do not comprise the steps d) and e) of the present invented method.

In particular embodiments, in the product obtainable by the method according to the invention the amount of maltose present is reduced by up to 100%, for example by 90%, for example by 80%, for example by 70% in comparison to conventional methods for example shown in Example 5 (76%). In other embodiments, the product obtainable by the method according to the invention comprises from 1 to 25% , such as 1 to 15%, or 5 to 15% , or for example 5 to 10% of the amount of maltose present in corresponding product produced by conventional method. In further embodiments, the product obtainable by the method of the invention comprises less than 5% w/w, such as 0.1 to 5% w/w, 0,1 to 4% w/w, 0,1 to 4%w/w, 0,1 to 3% w/w, 0,1 to 2.5%w/w or 0,05 to 2%w/w or 0,1 to 2% w/w maltose.

The product obtainable by the method the invention may be a liquid product, comprising hydrolysed starch, or the liquid may be dried. The product may be an ingredient, or a complete food.

In some embodiments of the method, the food product obtained is an intermediate. This means that the food product obtained is itself an ingredient, and as such will be further worked up for example by combining with further ingredients in order to achieve a final food product.

Such an intermediate may also be referred to as an enzymatically hydrolysed carbohydrate ingredient (HCI).

A finished food product means a food product as sold to the consumer. Examples of final food products include infant formulas (e.g. in powder form or ready to drink), cereals, drinks, and the like.

It should be noted that embodiments and features described in the context of one of the aspects of the present invention also apply to the other aspects of the invention.

The invention will now be described in further details in the following non-limiting examples.

### Examples

### Example 1: Conventional hydrolysis

The following conventional hydrolysis line set up leads to the production of HCI (Hydrolysed carbohydrate ingredient) as semi-finished liquid ingredient (an example of an intermediate food product).This HCI may be further included as an ingredient to make a final food product.

In the conventional setup, wheat flour is mixed with water (at ambient or warm temperature) and a solution of amylase by a screw conveyor. The resulting "dough" falls in the hydrolysis tank where steam is injected to reach the optimum temperature for the enzyme activity. Reaction time is typically 25 min in tank and then 10 to 20 min in tubes at this optimum temperature, depending on the extent of hydrolysis required. The obtained slurry has reduced viscosity and a Dextrose Equivalent (DE) around 15-25 under those conditions. It is then heat treated for hygienic reasons and to inactivate enzyme (for example: above 120°C for 20 sec). It is thereafter cooled before storage or direct use. HCI may be further wet-mixed with other ingredients (e.g. native flour ± sucrose, oil) before final heat treatment.

The slurry may also be dried to produce a powder, or used as a liquid food as above described.

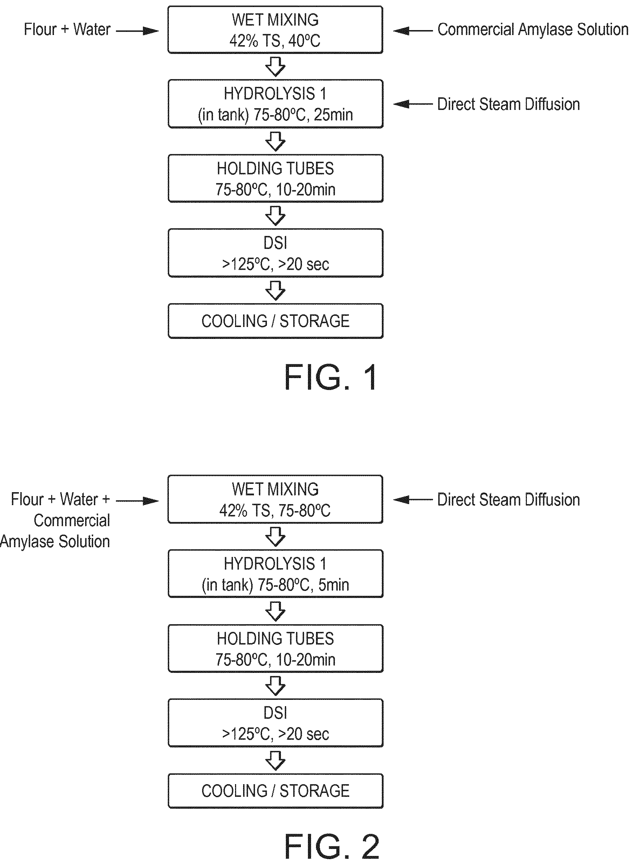

Figure 1 is a simplified process diagram of the HCI process.

### Example 2: Hydrolysis line set up with Ring Layer Mixer

In the method according to the invention, a Ring Layer Mixer (RLM) is used instead of the screw conveyor described above in Example 1. In that case, steam is directly injected in the RLM and not in the hydrolysis tank.

A simplified process diagram of the line with the RLM is given in Figure 2.

A RLM with 10 litre capacity was used, with speed set to 2000 rpm. The RLM had two inlets, wherein the first inlet was used to introduce wheat flour and enzyme solution. Steam was injected via the second inlet. The steam was superheated, and used to bring the temperature of the flour and enzyme mix in the tank to a temperature of 75 to 80 degrees Celsius, as measured by a probe. The ingredient mixture was thus almost instantaneously both heated and homogenized. The resulting treated mixture was transported out of the ring layer mixer to holding tanks. The treated mixture was incubated at 75 degrees C for about 25 minutes to allow the further hydrolysis by the enzymes.

The mixture is then heat treated for hygienic reasons and to inactivate enzyme (for example: above 120°C for 20 sec). It is thereafter cooled before storage or direct use. HCI may be further wet-mixed with other ingredients (e.g. native flour ± sucrose, oil) before final heat treatment.

The slurry may also be dried to produce a powder, or used as a liquid food as above described.

### Example 3: Conventional in-line hydrolysis set up

In this example of a conventional in-line hydrolysis process (where the hydrolysis is performed in the line of production of a finished food product), a wheat flour, water and optionally other ingredients (e.g. sucrose, oils, etc.) are mixed in a preparation tank. The slurry is then pumped into tubes. The amylase solution is injected in-line just before the static mixer where steam is injected to reach the optimum temperature for the enzyme activity (for example above 70 degrees C, such as from 70 to 95 degrees C, for example 70 to 90 degrees C, such as from 70 to 85 degrees C, for example from 75-85 degrees C). The amylase can also be added in the initial liquid batch preparation tank. The slurry is then further processed at this optimum temperature for a residence time (corresponding to the incubation of step f), depending on the extent of hydrolysis required (e.g. 2 to 10 minutes), before final heat treatment for hygienic reasons and enzymes inactivation (example: above 120°C for 20 sec). The slurry (comprising around 45% w/w solids) is then subject to a roller drying treatment (heat-treatment step, corresponsing to step j) according to the process of the invention) to provide the finished food product which may be then milled and packed for commercial use. Roller drying treatment is performed in a mono-cylinder roller dryer at a temperature comprised between 185 and 190 deg C and at speed comprised between 4 and 5 rpm.

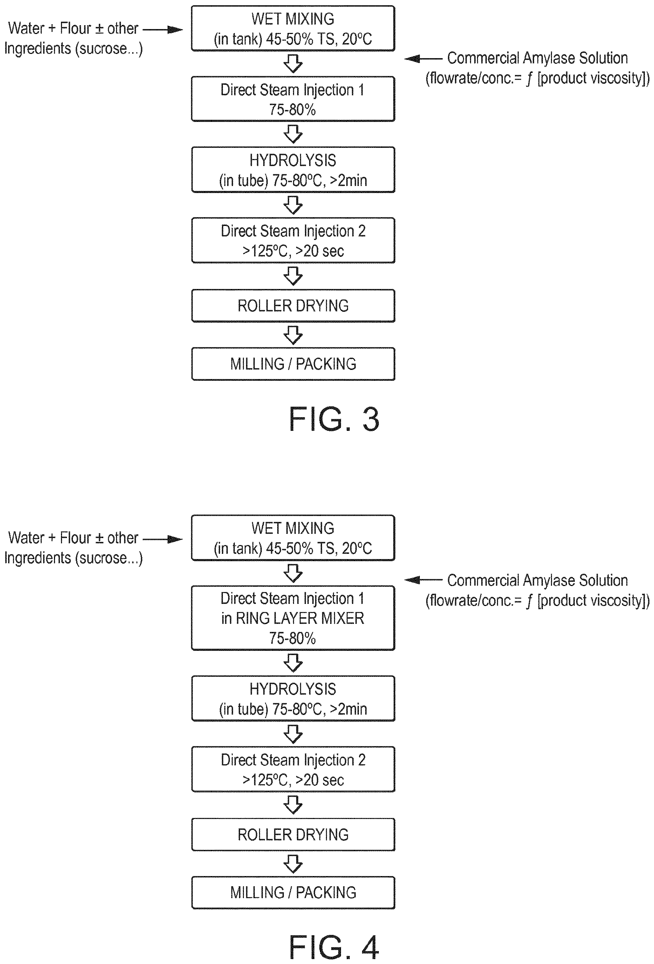

Figure 3 is a simplified process diagram for the in-line hydrolysis setup.

### Example 4: Method of the invention in in-line hydrolysis

The method of the invention may also be incorporated as an in-line method of hydrolysis in method for producing a finished food product.

In one example of the method according to the invention, the conventional steps of "enzyme dosing - steam injection - static mixer" as above described in Example 3 are replaced by a Ring Layer Mixer.

A RLM with 10 litre capacity was used, with speed set to 2000 rpm. The RLM had two inlets, wherein the first inlet was used to introduce ingredients' mixture and enzyme solution. Steam was injected via the second inlet. The steam was superheated, and used to bring the temperature of the flour and enzyme mix in the tank to a temperature of 75 to 80 degrees Celsius, as measured by a probe. The ingredient mixture was thus almost instantaneously both heated and homogenized. The resulting treated mixture was transported out of the ring layer mixer to holding tubes. The treated mixture was incubated at 75 degrees C for a time longer than 2 minutes to allow the further hydrolysis by the enzymes.

The key characteristic of this high shear mixer is that it allows instantaneous and simultaneous flour gelatinization and mixing with steam and amylase.

See a simplified process diagram in Figure 4.

### Example 5: Comparison of Maltose content

Maltose reduction was measured in two different set ups, with [set-up described in Examples 2) or 4)] and without ring layer mixer [set up described in Example 1) or 3)].

Sugars profile (HPAEC method), Dextrose Equivalent DE (Lane Eynon), dry matter (oven) and viscosity (flow curve at 30% solids, 50°C, 50 rpm, 20 min) were analyzed in liquid HCI (obtained analogously as described above in Examples 1 and 2 - reported in Table 1).

Sugars profile (HPAEC method) and viscosity (flow curve at concentration of the reconstitution clause, 50°C, 50 rpm, 20 min) were analyzed in roller-dried prototypes (obtained analogously as described above in Examples 3 and 3 - reported in Table 3)

**Table 2: Results Hydrolyzed Carbohydrate Ingredient semi-finished liquid ingredient**

| | | Sugars profile in liquid HCI ingredient (g/100g) | | | Physical/chemical parameters of the liquid HCI ingredient | | |
|---|---|---|---|---|---|---|---|
| Trial number | Setup Description | Sucrose | Maltos e | Total | Solids content (%) | Dextrose Equivalent (g/100g solids) | Relative Viscosity (mPa.s) |
| 19686.019 | Conventional | 0 | 7.1 | 7.5 | 40.0 | 16.5 | 230 |
| 19686.020 | Ring Layer Mixer | 0 | 2.1 | 2.4 | 37.6 | 12.0 | 160 |

Table 2 shows that the amount of maltose produced in the set up where a high shear mixer (ring layer mixer) is used is drastically reduced as compared to that of the conventional set up.

The relative viscosity and dextrose equivalents are also reduced showing potential to reduce the amount of added amylase and/or residence time.

**Table 3: Results - In-line Enzymatic Hydrolysis**

| | | Sugars profile in finished powder after roller-drying (g/100g) | | | Relative Viscosity of reconstitute d cereal powder (mPa.s) |
|---|---|---|---|---|---|
| Trial number | Line setup Description | Sucrose | Maltose | Total | |
| 13858.012 | Conventional in-line set up | 14.8 | 9.1 | 24.0 | 3300 |
| 17160.007 | Ring Layer Mixer with liquid premixing of ingredients | 15.0 | 2.2 | 17.2 | 1800 |
| 14516.014 | Ring Layer Mixer with direct feeding of powder (i.e. dry) ingredients | 13.9 | 2.4 | 16.3 | 2100 |

Table 3 shows that the amount of maltose produced in the set up where a high shear mixer (ring layer mixer) is used is drastically reduced as compared to that of the conventional set up.

The relative viscosity is also reduced showing potential to reduce the amount of added amylase and/or residence time.

Maltose levels resulting from set up described in Example 7 was measured in a roller dried product and compared with maltose levels obtained in a slurry obtained by mixing the same HCI ingredient and cereal based slurry but without applying the in-line dosing conditions described in Example 7.

**Table 5 Maltose levels resuting from use of in-line dosing (Example 7)**

| Trial number | Setup Description | Maltose profile in finished powder after roller-drying (g/100g) |
|---|---|---|
| 23811.014 | Ring Layer Mixer + in-line dosing (Example 7) | 2.93 |

Table 5 shows that mixing of a cereal based slurry with a semi finished ingredient (HCI) obtained by the use of a Ring Layer Mixer under the conditions described in Example 7 mantains the low maltose levels achieved via the preparation with a ring layer mixer, irrespective of the presence in such slurry of endogenous amylolytic enzymes.

### Example 6: Sensory profile

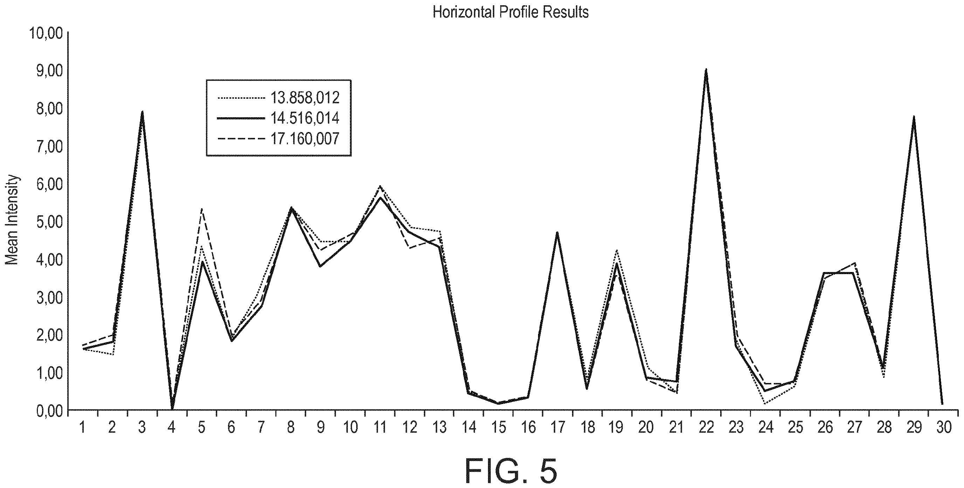

The impact on sensory profile for samples from in-line enzymatic hydrolysis described (samples of Examples 3 and 4, Table 3) was investigated and the results are shown in Table 4 below and visualized in Figure 5.

Roller-dried prototypes, reconstituted into a cereal porridge, were assessed by an external trained sensory panel of 12 assessors. Monadic profiles were conducted on product appearance, flavour/aroma and texture without repetition. As described above, viscosity scores are lower showing potential to reduce the amount of added amylase and/or residence time. Besides, results show that maltose reduction in this type of recipe and process conditions have no significant (no difference in intensity >1), except for the viscosity attribute impact on the overall product sensory attributes. This represents a further advantage of the achieved sugar reduction.

**Table 4**

| Impact on sensory profile for samples from in-line enzymatic hydrolysis. 0= no sensory intensity; 10= high sensory intensity. | | | | |
|---|---|---|---|---|
| | Parameter | Trial no. 13.858.012 | Trial no. 17.160.007 | Trial no. 14.516.014 |
| Line setup Description | | (Conventional in-line set up) | Ring Layer Mixer with liquid premixing of ingredients | Ring Layer Mixer with direct feeding of powder (i.e. dry) ingredients |
| 1 | Dark powder_dry | 1,58 | 1,71 | 1,61 |
| 2 | ParticulesSize_ | 1,49 | 1,96 | 1,78 |
| 3 | Ease to reconstitute | 7,54 | 7,92 | 7,88 |
| 4 | Lumpy | 0,17 | 0,00 | 0,00 |
| 5 | Thick Viscosity | 4,37 | 5,36 | 3,93 |
| 6 | Dark colour pap | 1,94 | 1,99 | 1,83 |
| 7 | Overall smell_d | 3,22 | 3,01 | 2,79 |
| 8 | Overall smell_p | 5,42 | 5,38 | 5,32 |
| 9 | Cereal smell_pa | 4,45 | 4,21 | 3,82 |
| 10 | Milky smell_pap | 4,51 | 4,63 | 4,48 |
| 11 | Overall Flavour | 5,96 | 5,92 | 5,63 |
| 12 | Overall cereals | 4,87 | 4,29 | 4,72 |
| | Parameter | Trial no. 13.858,012 | Trial no. 17.160,007 | Trial no. 14.516,014 |
| 13 | Wheat _fl | 4,73 | 4,55 | 4,32 |
| 14 | Toasted cereal_ | 0,53 | 0,54 | 0,45 |
| 15 | Biscuit_fl | 0,17 | 0,17 | 0,17 |
| 16 | Vanilla_fl | 0,33 | 0,38 | 0,32 |
| 17 | Milky flavour | 4,71 | 4,74 | 4,71 |
| 18 | Buttery | 0,78 | 0,45 | 0,53 |
| 19 | Sweet | 4,28 | 3,71 | 3,87 |
| 20 | Bitter | 1,10 | 0,79 | 0,87 |
| 21 | Perceptible | 0,47 | 0,42 | 0,70 |
| 22 | Smooth pap | 9,06 | 9,09 | 8,79 |
| 23 | Sticky | 1,96 | 2,17 | 1,74 |
| 24 | Floury | 0,17 | 0,66 | 0,49 |
| 25 | Gluey | 0,62 | 0,70 | 0,76 |
| 26 | Mouthcoating | 3,46 | 3,50 | 3,63 |
| 27 | Viscosity | 3,86 | 3,96 | 3,63 |
| 28 | Astringent | 0,82 | 1,12 | 1,13 |
| 29 | Easy to swallow | 7,79 | 7,72 | 7,80 |
| 30 | Residue | 0,17 | 0,17 | 0,21 |

### Example 7: In-line dosing of HCI and cereal based slurry

A cereal soup (cereal based slurry) is mixed in-line with a stream of HCI (intermediate product consisting on partially hydrolyzed cereal prepared as described above in Example 2) by means of a static mixer. For each of the streams flow rate is measured and controlled (HCI: 109Kg/h; Cereal based slurry: 141Kg/h). The mix is subsequently pasteurized by direct steam injection (DSI) and the resulting holding time and temperature are controlled to ensure food safety for the product. The product is then flashed at atmospheric pressure and pumped by means of a positive pump for subsequent processing.

To minimize the generation of sugars (maltose) in-between the mixing point of the two streams of cereal based soup and HCI ingredient (mixing tee) and the heat treatment (DSI), the length of pipe and static mixer is set to have less than 20 seconds holding time ideally for the lowest flow rate.

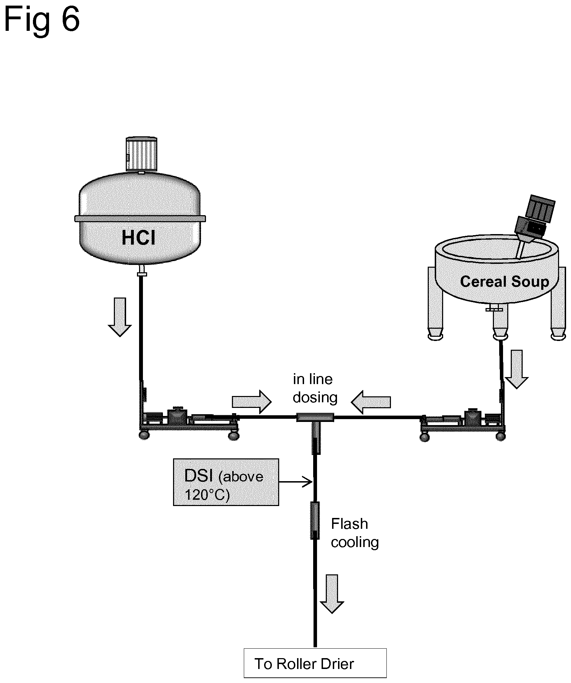

An exemplary simplified process diagram of the in-line dosing of HCI and cereal based slurry with the RLM is given in Figure 6.

## Claims

1. A method for producing a food product comprising hydrolysed starch, said method comprising the steps of :
a) Providing a starting material which comprises both starch and at least one amylolytic enzyme,
b) Providing as ingredients: water, at least one further amylolytic enzyme comprising amylase not endogenous to the provided starting material and optionally one or more other ingredients,
c) Mixing the starting material of step a) and the ingredients of step b)
d) adjusting the temperature of the mixture of step c) to a temperature which leads to gelatinization of the starch in said mixture and inactivation of the at least one amylolytic enzyme which was provided with the starting material in a), and
e) simultaneously to step d), subjecting said mixture of step c) to high shear mixing, wherein said high shear mixing is achieved by use of a Ring Layer Mixer.
f) Incubating the mixture of step e) such that the desired degree of hydrolysis is achieved,
thereby obtaining a food product comprising hydrolysed starch.

2. The method according to claim 1, wherein the at least one further amylolytic enzyme which is provided in step b) is active at or above the temperature to which the mixture is adjusted in step d).

3. The method according to claim 1, wherein in step d) the mixture of step c) is adjusted at a temperature which is higher than 70 deg C, for example ranging from 70 deg C to 95 deg C.

4. The method according to claim 2 or 3, wherein step d) is performed by direct steam injection.

5. The method according to any of claims 1 to 4, wherein said high shear mixing in step e) is such that the mixture is homogenized within a time period of 1 second to 50 seconds.

6. The method according to any of the preceding claims, wherein said starting material is a plant preparation.

7. The method according to claim 6, wherein the starting material is selected from a flour of one or more grains, such as a flour selected from wheat flour, rice flour, maize flour, barley flour, rye flour, oat flour, buckwheat flour, millet flour, quinoa flour, sorghum flour; a flour made from one or more tubers, such as potato, cassava; a flour made from legumes such as pea flour; or combinations thereof.

8. The method according to any of the preceding claims, wherein said mixture of step c) has a total solids content in the range of 20 to 60 % w/w.

9. The method according to any of the preceding claims, wherein the temperature in step d) is adjusted to a temperature above starch gelatinization and endogenous amylolytic enzyme inactivation, for example above 70 degrees C.

10. The method according to any of the preceding claims, wherein the incubation of step f) is performed at a temperature in a range selected such that the at least one further amylolytic enzyme has an optimal activity.

11. The method according to any of the preceding claims, wherein the incubation of step f) is performed at a temperature in the range of from 70 to 95 degrees C, for a period of time in the range from 1 minute to 12 hours.

12. The method according to any of the preceding claims, further comprising step
g) additional heat treatment of the mixture which was obtained by high shear mixing according to steps a) to f).

13. The method according to claim 12 wherein an intermediate hydrolysed carbohydrate ingredient obtained by high shear mixing according to steps a) to f) is mixed with additional ingredients comprising starch before step g) takes place.

14. The method according to any of the preceding claims wherein the food product comprises reduced levels of maltose as compared to those obtainable by conventional starch hydrolysis processes, which do not comprise the steps d) and e) of the present invented method.

## Patentansprüche

1. Verfahren zum Herstellen eines Lebensmittelprodukts, das hydrolysierte Stärke umfasst, wobei das Verfahren folgende Schritte umfasst:
a) Bereitstellen eines Ausgangsmaterials, das sowohl Stärke als auch mindestens ein amylolytisches Enzym umfasst,
b) Bereitstellen als Inhaltsstoffe: Wasser, mindestens ein weiteres amylolytisches Enzym, das Amylase umfasst, die für das bereitgestellte Ausgangsmaterial nicht endogen ist, und wahlweise einen oder mehrere andere Inhaltsstoffe,
c) Mischen des Ausgangsmaterials aus Schritt a) mit den Inhaltsstoffen aus Schritt b)
d) Einstellen der Temperatur der Mischung aus Schritt c) auf eine Temperatur, die zum Gelatinieren der Stärke in der Mischung und Inaktivieren des mindestens einen amylolytischen Enzyms führt, das mit dem Ausgangsmaterial in a) bereitgestellt wurde, und
e) gleichzeitig mit Schritt d) Behandeln der Mischung aus Schritt c) durch Hochscherungsmischen, wobei das Hochscherungsmischen durch Verwenden eines Ringschichtmischers erreicht wird,
f) Inkubieren der Mischung aus Schritt e), so dass der gewünschte Hydrolysegrad erreicht wird,
wodurch ein Nahrungsmittelprodukt erhalten wird, das hydrolysierte Stärke umfasst.

2. Verfahren nach Anspruch 1, wobei das mindestens eine amylolytische Enzym, das in Schritt b) bereitgestellt wird, bei oder oberhalb der Temperatur, auf die die Mischung in Schritt d) eingestellt wird, aktiv ist.

3. Verfahren nach Anspruch 1, wobei in Schritt d) die Mischung aus Schritt c) auf eine Temperatur eingestellt wird, die höher als 70 °C ist, zum Beispiel im Bereich von 70 °C bis 95 °C.

4. Verfahren nach Anspruch 2 oder 3, wobei Schritt d) durch direkte Dampfinjektion erfolgt.

5. Verfahren nach einem der Ansprüche 1 bis 4, wobei das Hochscherungsmischen in Schritt e) derart ist, dass die Mischung innerhalb eines Zeitraums von 1 Sekunde bis 50 Sekunden homogenisiert wird.

6. Verfahren nach einem der vorstehenden Ansprüche, wobei das Ausgangsmaterial ein Pflanzenpräparat ist.

7. Verfahren nach Anspruch 6, wobei das Ausgangsmaterial ausgewählt ist aus einem Mehl eines oder mehrerer Körner, wie einem Mehl, das ausgewählt ist aus Weizenmehl, Reismehl, Maismehl, Gerstenmehl, Roggenmehl, Hafermehl, Buchweizenmehl, Hirsemehl, Quinoamehl, Sorghummehl; einem Mehl, das aus einer oder mehreren Knollen, wie Kartoffel, Maniok hergestellt ist; einem Mehl, das aus Hülsenfrüchten, wie Erbsenmehl hergestellt ist; oder Kombinationen davon.

8. Verfahren nach einem der vorstehenden Ansprüche, wobei die Mischung aus Schritt c) einen Gesamtfeststoffgehalt im Bereich von 20 bis 60 Gew.-% aufweist.

9. Verfahren nach einem der vorstehenden Ansprüche, wobei die Temperatur in Schritt d) auf eine Temperatur oberhalb der Stärkegelatinierung und der Inaktivierung des endogenen amylolytischen Enzyms, zum Beispiel oberhalb 70 °C, eingestellt wird.

10. Verfahren nach einem der vorstehenden Ansprüche, wobei die Inkubation aus Schritt f) bei einer Temperatur in einem Bereich durchgeführt wird, der so gewählt ist, dass das mindestens eine weitere amylolytische Enzym eine optimale Aktivität aufweist.

11. Verfahren nach einem der vorstehenden Ansprüche, wobei die Inkubation aus Schritt f) bei einer Temperatur im Bereich von 70 bis 95 °C für einen Zeitraum im Bereich von 1 Minute bis 12 Stunden durchgeführt wird.

12. Verfahren nach einem der vorstehenden Ansprüche, ferner umfassend den Schritt
g) zusätzliche Wärmebehandlung der Mischung, die durch Hochscherungsmischen gemäß Schritt a) bis f) erhalten wurde.

13. Verfahren nach Anspruch 12, wobei ein hydrolysierter Kohlenhydrat-Zwischeninhaltsstoff, der durch Hochscherungsmischen gemäß Schritt a) bis f) erhalten wird, bevor Schritt g) stattfindet, mit zusätzlichen Stärke umfassenden Inhaltsstoffen gemischt wird.

14. Verfahren nach einem der vorstehenden Ansprüche, wobei das Lebensmittelprodukt reduzierte Maltosemengen im Vergleich zu denen umfasst, die durch herkömmliche Stärkehydrolyseverfahren erhältlich sind, die Schritt d) und e) des vorliegenden erfindungsgemäßen Verfahrens nicht umfassen.

## Revendications

1. Procédé de production d'un produit alimentaire comprenant de l'amidon hydrolysé, ledit procédé comprenant les étapes consistant à :
a) fournir un matériau de départ qui comprend à la fois de l'amidon et au moins une enzyme amylolytique,
b) fournir comme ingrédients : de l'eau, au moins une autre enzyme amylolytique comprenant une amylase non endogène au matériau de départ fourni et éventuellement un ou plusieurs autres ingrédients,
c) mélanger le matériau de départ de l'étape a) et les ingrédients de l'étape b)
d) ajuster la température du mélange de l'étape c) à une température qui conduit à la gélatinisation de l'amidon dans ledit mélange et à l'inactivation de ladite au moins une enzyme amylolytique qui a été fournie avec le matériau de départ en a), et
e) simultanément à l'étape d), soumettre ledit mélange de l'étape c) à un mélange par cisaillement élevé, dans lequel ledit mélange par cisaillement élevé est obtenu par l'utilisation d'un mélangeur à couche annulaire.
f) incuber le mélange de l'étape e) de telle sorte que le degré souhaité d'hydrolyse est obtenu,
ce qui permet d'obtenir un produit alimentaire comprenant de l'amidon hydrolysé.

2. Procédé selon la revendication 1, dans lequel l'au moins une enzyme amylolytique qui est fournie à l'étape b) est active à une température égale ou supérieure à la température à laquelle le mélange est ajusté à l'étape d).

3. Procédé selon la revendication 1, dans lequel à l'étape d) le mélange de l'étape c) est ajusté à une température qui est supérieure à 70 deg C, par exemple allant de 70 deg C à 95 deg C.

4. Procédé selon la revendication 2 ou 3, dans lequel l'étape d) est mise en œuvre par injection directe de vapeur.

5. Procédé selon l'une quelconque des revendications 1 à 4, dans lequel ledit mélange par cisaillement élevé à l'étape e) est tel que le mélange est homogénéisé dans les limites d'une période de temps de 1 seconde à 50 secondes.

6. Procédé selon l'une quelconque des revendications précédentes, dans lequel ledit matériau de départ est une préparation végétale.

7. Procédé selon la revendication 6, dans lequel le matériau de départ est choisi parmi une farine d'une ou plusieurs céréales, telle qu'une farine choisie parmi de la farine de blé, de la farine de riz, de la farine de maïs, de la farine d'orge, de la farine de seigle, de la farine d'avoine, de la farine de sarrasin, de la farine de millet, de la farine de quinoa, de la farine de sorgho ; une farine fabriquée à partir d'un ou plusieurs tubercules, tels que la pomme de terre, le manioc ; une farine fabriquée à partir de légumineuses telle que de la farine de pois ; ou des combinaisons de celles-ci.

8. Procédé selon l'une quelconque des revendications précédentes, dans lequel ledit mélange de l'étape c) a une teneur totale en solides dans la plage de 20 à 60 % en poids.

9. Procédé selon l'une quelconque des revendications précédentes, dans lequel la température à l'étape d) est ajustée à une température supérieure à la gélatinisation d'amidon et à l'inactivation de l'enzyme amylolytique endogène, par exemple supérieure à 70 degrés C.

10. Procédé selon l'une quelconque des revendications précédentes, dans lequel l'incubation de l'étape f) est réalisée à une température comprise dans une plage choisie de sorte que l'au moins une autre enzyme amylolytique présente une activité optimale.

11. Procédé selon l'une quelconque des revendications précédentes, dans lequel l'incubation de l'étape f) est mise en œuvre à une température dans la plage allant de 70 à 95 degrés C, pendant une période de temps dans la plage allant de 1 minute à 12 heures.

12. Procédé selon l'une quelconque des revendications précédentes, comprenant en outre les étapes de
g) traitement thermique additionnel du mélange obtenu par un mélange par cisaillement élevé selon les étapes a) à f).

13. Procédé selon la revendication 12, dans lequel un ingrédient de carbohydrate hydrolysé intermédiaire obtenu par un mélange par cisaillement élevé selon les étapes a) à f) est mélangé avec des ingrédients supplémentaires comprenant de l'amidon avant l'étape g).

14. Procédé selon l'une quelconque des revendications précédentes, dans lequel le produit alimentaire comprend des taux réduits de maltose par rapport à ceux pouvant être obtenus par des procédés conventionnels d'hydrolyse d'amidon, qui ne comprennent pas les étapes d) et e) du présent procédé inventé.
